# EUROPEAN PATENT APPLICATION

(11) **EP 3 301 852 A1**
(43) Date of publication of application: **04.04.2018**
(21) Application number: 16290189.6
(22) Date of filing: 29.09.2016
(51) Int. Cl.: H04L 9/08, H04L 29/06

(54) **METHOD TO GENERATE AND USE A UNIQUE PERSISTENT NODE IDENTITY, CORRESPONDING INITIATOR NODE AND RESPONDER NODE**

(71) Applicant: Alcatel Lucent, 92100 Boulogne-Billancourt (FR)
(72) Inventor: VAN DE VELDE, Thierry, 2018 Antwerpen (BE)
(74) Representative: IP HILLS NV

(57) **Abstract**

A method to generate and use a unique persistent node identity for identifying and authenticating a node (1) in a telecommunication network (2), comprises generating a shared secret key value K through a computational algorithm with a difficulty condition (111, 112) limiting the number of valid node identities.

## Description

### Technical Field

The present invention generally relates to the identification of nodes in communication networks. Nodes can for instance be endpoints like user devices, objects, sensors, virtual machines, containers, computer programs, etc., or intermediate nodes like gateways, proxy's, switches, etc., that relay or forward traffic in communication networks. The identification of such nodes is necessary for the purpose of authenticating and authorizing access to certain services, and possibly also for the purpose of charging for certain services.

### Background

Before a node is admitted to join a communication network, it needs to be identified. In the ISO OSI model, each layer starting from layer 2 or above, uses distinct parameters to identify each endpoint, and a superior OSI layer trusts the identity provided by an inferior OSI layer.

At present, various public identities are used for instance by endpoints connecting to telecommunication networks. Examples are the International Mobile Equipment Identity (IMEI) as used in 3GPP or third generation mobile networks, or an extended unique identifier like MAC-48, EUI-48, EUI-64 as used in IEEE networks. These public identities are access technology specific. Other examples like the International Mobile Subscriber Identity (ITU-T E.212 IMSI), the Mobile Subscriber Integrated Services Digital Network number (ITU-T E.164 MSISDN), the Security Certificate (ITU-T X.509), the Internet Protocol Address (IETF IPv4 or IPv6, the e-mail address, the Facebook user name, etc., are access technology independent public identities.

### Summary

As mentioned here above, certain endpoint identities are specific to one particular wireless or wireline access technology, e.g. Wi-Fi, Bluetooth, LoRa, Zigbee, Ethernet, LTE, etc. An increasing number of endpoints however is connected to multiple access technologies, either simultaneously or at different times. Consequently, there is a growing demand for a persistent unique identity that is independent of the access network technology and further resolves one or more of the problems mentioned below.

It is difficult to guarantee the uniqueness of public identities within a communication network. The IMEI, MAC addresses or IMSI can easily be duplicated by a manufacturer of endpoints or by other organizations. IP addresses can be spoofed. There is in general no computational difficulty to generate a public identity. Anyone who is aware of the published format, e.g. by 3GPP, ITU-T, IETF, etc., can generate a valid public identity and use it in an attempt to join the communication network. If endpoints are admitted without prior authentication with a central authority, which happens for instance in certain IEEE 802 networks, duplicate endpoint identities can occur.

Therefore, prior to admitting an endpoint several telecommunication networks authenticate that endpoint through a shared secret that is pre-provisioned in the endpoint and in the networks' central authentication system. An example of such pre-provisioned shared secret is the Authentication Key Ki in the 3GPP Subscriber Identity Module (SIM) and in the Home Subscriber Server (HSS), the public identity being the IMSI. Another example of such pre-provisioned shared secret is a password protecting access to an e-mail account.

The processes to distribute, renew and revoke these shared secrets require that there is a central authority in the network that is emitting them, and/or a roaming interconnection between the visited serving network and the home network where the endpoint's secret is known. In the example of 3GPP authentication, the HSS continuously generates authentication vectors using secret Ki and downloads these authentication vectors into the visited network element. The processes to issue or distribute, to renew and to revoke existing endpoint identities while ensuring their uniqueness consequently are tedious, costly and not scalable to massive Machine Type Communications (mMTC), also known as the Internet of Things (IoT), defined as a network with at least one hundred thousand endpoints per square kilometre.

A further particular problem in the Internet of Things is that contrary to human beings, an object cannot subscribe to network services like for instance internet connectivity, mobility, being exposed and being actionable through APIs, etc. As a consequence there is a growing need for new models and processes that enable objects to autonomously identify with communication networks and gain access to network services without human intervention.

An existing alternative to pre-provisioned secrets is a Public Key Infrastructure (PKI). In the IEEE Public Key Infrastructure, the network node or an associated storage facility must possess the public key certificate (the root certificate) of the remote Certificate Authority having signed the endpoint's certificate in order to validate that endpoint's certificate locally. Thus, PKI the network node (i.e. a Security Gateway, Virtual Private Network Gateway or Tunnelled Layer Security server) can autonomously authenticate the endpoint's public key certificate without obtaining an authentication vector nor querying an authentication server in real-time, but the PKI relies on a previous process in which the endpoint's public key certificate must be submitted and signed by the Certificate Authority.

Furthermore, in the PKI the endpoint (the initiator) must possess the private key corresponding to the public key in its certificate, in order to calculate the shared secret which permits to decrypt the encrypted downstream traffic from the responder to the initiator. Either the private-public key pair is locally generated within the initiator, and then the initiator acts as Registration Authority submitting the certificate to the Certificate Authority for signature, or the private-public key pair is generated externally, submitted for signature and then the private key plus signed certificate must be transferred to the initiator through an unspecified process.

A straightforward solution to identify nodes in communication networks could rely on the selection of a large random identity, e.g. a 1024 bit random number, by the endpoint or initiator of a connection. The probability that two endpoints would pick the same identity for connectivity with the same communication network would be very low, which is a benefit over IP addresses, MAC addresses or IMSIs. However, the network could then not resist an attack consisting of the generation of an exaggerated number of identities. Since anyone could easily produce such identities the commercial value of such large random number is zero.

Cryptocurrency such as Bitcoins could solve the above mentioned problem since only a limited number of identities could ever be generated due to the computational difficulty condition imposed by a difficulty controller to generate Bitcoins. Bitcoins however cannot be used as identities of nodes in a communication network since existing telecommunication infrastructure such as security gateways, mobile gateways or broadband network gateways do not support the receipt of Bitcoins over standard telecommunication protocols.

Summarizing, it is an objective to provide a mechanism for generating and using a unique persistent node identity for identifying and authenticating a node in a telecommunication network that is independent of the access technology; verifiable without relying on a central authentication server, registration nor certificate authority; safeguarding the network from an exaggerated number of valid node identities; and whose distribution, renewal and revocation is scalable to massive Machine Type Communications.

It is a further objective to provide a mechanism for generating such unique persistent node identity and restricting the use thereof to a particular time period, to a particular zone, i.e. a group of networks, a network or part of a network; and/or to a particular group of nodes sharing similar characteristics, e.g. cars, refrigerators, etc.

Embodiments of the invention defined by claim 1, disclose method to generate and use a unique persistent node identity for identifying and authenticating a node in a telecommunication network, the method comprising generating a shared secret key value through a computational algorithm with a difficulty condition limiting the number of valid node identities.

Thus, besides the existing pre-provisioned secrets and signed public key certificates, the present invention introduces a third category of node identity wherein the format of the node identity is also imposed by a standards organization or central authority, however wherein a difficulty controller further imposes a computational difficulty to generate the node identity. As a result, the number of valid node identities remains limited and controllable, no shared secret must be pre-provisioned in each node, and no public key certificate must be submitted to a central authority for signature. The network still has a standards organization or central authority fixing the identity formats, but also a difficulty controller imposing computational difficulty conditions. The central authority is not involved in the authentication procedure of individual nodes or endpoints. The difficulty controller is consulted by the participating nodes in advance of the identification and authentication procedures. An endpoint like for instance an object in the loT can thus autonomously generate an identity to initiate an association to a responding network node, and use the autonomously generated identity in the identification and authentication procedure of the endpoint. Unlike with pre-shared keys there is no need for the initiator nor for the responder to contact any central authority in real time during the identification or authentication procedure. And unlike in the PKI there's no need to submit the identity for signature. Still the secrecy and integrity is achieved of the communication between the initiator and the responder. The present invention hence concerns a more desirable identification and authentication mechanism than pre-provisioned secrets and pre-signed public key certificates. Furthermore, the node identity generated according to the present invention is access technology independent. A single node can establish a unique persistent node identity regardless of the different access technologies it is connected to. Moreover, the invention is resistant against Denial of Service (DoS) attacks since the difficulty condition prevents that a high number of identities is generated to overwhelm the network. With the present invention the total number of admitted nodes can be limited without central authority participating in the admission procedure nor signing security certificates.

Embodiments of the invention defined by claim 2 disclose a method to generate and use a unique persistent node identity for identifying and authenticating a node in a telecommunication network, comprising:
- an initiator selecting a generator value of the Diffie-Hellman group, a prime value for the Diffie-Hellman algorithm, and a first secret value for which the corresponding first Diffie-Hellman value satisfies a first difficulty condition;
- the initiator generating or retrieving an initiator number-only-once;
- the initiator transferring the generator value, the prime value, the first Diffie-Hellman value and the initiator number-only-once to a responder;
- the responder verifying whether the first Diffie-Hellman value satisfies the first difficulty condition and if it does:
- the responder generating a responder number-only-once through a pseudo-random function of at least one of said first Diffie-Hellman value and the initiator number-only-once;
- the responder generating a second secret value;
- the responder calculating a second Diffie-Hellman value for the generator value, the second secret value and the prime value;
- the responder transferring the second Diffie-Hellman value and the responder number-only-once to the initiator;
- the initiator storing the generator value, the prime value and the first secret value to jointly form the unique persistent node identity;
- the responder calculating the shared secret key value from the first Diffie-Hellman value, the second secret value and the prime value; and
- the initiator calculating the same shared secret key value from the first Diffie-Hellman value, the first secret value and the prime value.

Thus, a first stage takes place in the control plane, during the Diffie-Hellman exchange between an initiator, e.g. an object, endpoint or more generally a node wishing to identify itself to and be authenticated by a telecommunication network, and a responder in that telecommunication network. The purpose of the standard Diffie-Hellman exchange is to generate a shared secret key value K without allowing intermediate eavesdroppers to discover the shared secret key value K. In an embodiment of the present invention the initiator may verify if a first Diffie-Hellman value A satisfies a first difficulty condition imposed by the network: for instance, the initiator verifies if a first Diffie-Hellman value A is numerically inferior or equal to a first difficulty level Di that is upfront learned from a difficulty controller, i.e. a trusted entity in the network that controls the difficulty levels. To calculate the first Diffie-Hellman value A, the initiator needs a generator value g of the Diffie-Hellman group, a prime value p for the Diffie-Hellman algorithm, and a first secret value a. The values g, p and a may be selected locally by the initiator or may be purchased from a stock exchange as in the case of cryptocurrency. The purchaser may verify the validity or economic value of g, p and a by computing the first Diffie-Hellman value A and examining whether it satisfies the public first difficulty condition learned from the difficulty controller. The initiator further generates a random initiator number-only-once Ni or retrieves it from local storage, and transfers the generator value g, prime value p, the calculated first Diffie-Hellman value A and the initiator number-only-once Ni to the responder, for instance as part of a standard IKE_SA_INIT request message. The responder, who has also learned the first difficulty condition upfront from the difficulty controller, verifies if the first Diffie-Hellman value A satisfies the first difficulty condition. If this is the case the responder switches to a specific procedure wherein a responder number-only-once Nr is calculated as a pseudo-random function of at least one of the received first Diffie-Hellman value A and the received initiator number-only-once Ni. A characteristic of the present invention is that the pseudo-random function generating Nr is deterministic: provided the same input values, the same result is obtained. The responder then generates a second secret value b either randomly (as in standard Diffie-Hellman exchanges) or by mining (repeatedly attempting random values and then selecting a value) such that a second difficulty condition is satisfied for the second Diffie-Hellman value, the shared secret key value K resulting from the Diffie-Hellman exchange and/or even for further derived keying material of the security association (for example SKEYSEED). With the received generator value g, the received prime value p, and the second secret value b, the responder now calculates a second Diffie-Hellman value B. This second Diffie-Hellman value B and the responder number-only-once Nr are communicated to the initiator, for instance as part of an IKE_SA_INIT response message. At this point the initiator may assess whether the received responder number-only-once Nr is the result of applying the pseudo-random function to at least one of the received first Diffie-Hellman value A and the initiator number-only-once Ni. If this is true the initiator may switch to further specific procedure. As in a standard Diffie-Hellman exchange both the responder and the initiator can now calculate a same shared secret key value K and an Eavesdropper knowing the pseudo-random function and having observed all parameters exchanged (A, g, p, Ni, B and Nr) cannot calculate K using reasonable computing power. The responder calculates the shared secret key value K from the received first Diffie-Hellman value A, the second secret value b, and the prime value p. The initiator calculates the shared secret key value K from the received second Diffie-Hellman value B, the first secret value a and the prime value p. Further keying material can then be derived by the initiator and by the responder from the shared secret key value K, for example the SKEYSEED as a function of K, Ni and Nr. In an embodiment of the present invention at the initiator side the generator value g, prime value p, first secret value a are stored to jointly form a unique persistent identity for that node. The so generated unique persistent identity may be used to identify and authenticate with a subsequent responder which does not have access to the same authentication server and does not possess the same root certificate as the initial responder. As will be explained in more detail below, the subsequent responder shall inspect whether the first Diffie-Hellman value A satisfies the first difficulty condition in order to switch to a special procedure for calculating the responder number-only-once Nr, and the initiator may assess whether the responder number-only-once Nr was indeed calculated using the pseudo-random function rather than being randomly selected. The initiator and subsequent responder will then also be able to transmit and/or receive encrypted and integrity-verified traffic using a second shared secret key value K'.

Embodiments of the invention defined by claim 3 disclose a method to generate and use a unique persistent node identity for identifying and authenticating a node in a telecommunication network, further comprising:
- the initiator assessing whether the responder number-only-once is resulting from applying said pseudo-random function to at least one of the first Diffie-Hellman value and the initiator number-only-once in order to decide whether the responder supports the special procedure of the present invention, whether to communicate with the responder and/or which information to send to the responder.

Indeed, an important aspect of the present method to generate a unique persistent node identity resides in the fact that it is verifiable by the initiator. As such, the initiator can trust the responder and decide to communicate with the responder as well as which information to send to the responder.

In embodiments of the method to generate and use a unique persistent node identity for identifying and authenticating a node in a telecommunication network according to the invention, defined by claim 4, the responder generates the responder number-only-once through a pseudo-random function of at least one of the first Diffie-Hellman value and the initiator number-only-once, and furthermore of one or more of:
- a time period identifier representing a time period;
- a zone identifier representing a zone, i.e. a group of networks, a network or a part of a network; and
- a node type identifier representing a group of nodes;
and the initiator stores the generator value, the prime value, the first secret value, the initiator number-only-once and respectively the time period identifier and/or the zone identifier and/or the node type identifier to jointly form a restricted unique persistent node identity which is only significant within the time period and/or within the zone, and/or within the group of nodes.

Thus, in case the environmental variables comprise a time period identifier T, the use of the node identity can be restricted to a particular time period. In case the environmental variables comprise a zone identifier Z, the use of the node identity can be restricted to a particular zone, e.g. a group of networks like all mobile 3GPP networks in South-Korea, a single network like the mobile 3GPP network of a single mobile network operator in South-Korea, or even a portion of a network. In case the environmental variables comprise a node type identifier G, the use of the node identity can be restricted to a particular type of nodes, e.g. a particular group of endpoints sharing similar characteristics like for instance cars, refrigerators, flowerpots, etc. Obviously, a combination of environmental parameters as input for the pseudo-random functions enables to refine the restrictions imposed on the use of the node identity, e.g. to South-Korean refrigerators for a time span of 6 months. In any of those cases, the environmental variables T, Z, G must be stored together with the generator value g, the prime value p and the first secret value a to jointly form the unique persistent node identity with restricted use. Since subsequently derived keying material such as the SKEYSEED is dependent on the responder number-only-once it becomes dependent on the time period, zone and/or group of nodes.

In embodiments of the method to generate and use a unique persistent node identity for identifying and authenticating a node in a telecommunication network according to the invention, defined by claim 5, the responder generates the second secret value through a second pseudo-random function of an additional variable with value such that the second Diffie-Hellman value, said shared secret key value, or derived keying material of the security association satisfies a second difficulty condition.

Indeed, optionally the responder may mine values for an additional variable v that is used by a second pseudo-random function that delivers a second secret key value such that a second difficulty condition is satisfied. In other words, variant embodiments of the method according to the invention may also require computational effort from the responder in order to generate a valid node identity. The difficulty condition may for instance specify that the shared secret key value K, as calculated by the responder, is numerically inferior or equal to a second difficulty level Dr that is upfront communicated by the difficulty controller to the responder and initiator. The second pseudo-random function itself may be publicly known but the value of variable v shall not be revealed to potential eavesdroppers. The role of the optional variable v is to allow the responder to mine for the value of v, thus attempting several random values for v and selecting a single one such that the second Diffie-Hellman value, the shared secret key value K or even further derived keying material of the security association (such as for example SKEYSEED) satisfies the second difficulty condition. A unique persistent node identity that is obtained through a mathematical method imposing a difficulty level on both the initiator and the responder further complicates spoofing attacks as it makes fake responding more difficult.

Embodiments of the invention defined by claim 6 disclose a method to generate and use a unique persistent node identity for identifying and authenticating a node in a telecommunication network, further comprising:
- the initiator assessing whether the second Diffie-Hellman value satisfies the second difficulty condition in order to decide whether to communicate with the responder or which information to send to the responder, and/or
- the initiator assessing whether the shared secret key value K satisfies the second difficulty condition in order to decide whether to communicate with the responder or which information to send to the responder, and/or
- the initiator assessing whether further keying material of the security association satisfies the second difficulty condition in order to decide whether to communicate with the responder or which information to send to the responder.

Indeed, also the second difficulty condition that must be satisfied by the responder, must be verifiable by the initiator. The initiator this way can build greater trust in the responder than based on the responder number-only-once Nr being the result of the pseudo-random function, and the initiator can decide whether to communicate with the responder and what information to share with the responder.

Embodiments of the invention defined by claim 7 disclose a method to generate and use a unique persistent node identity for identifying and authenticating a node in a telecommunication network, further comprising:
- the responder storing the generator value, the prime value, the additional variable and at least one of the first Diffie-Hellman value and the initiator number-only-once.

Indeed, although not required at the responder side, the responder optionally may store the parameter values received from the initiator, g, p, A and/or Ni, together with the value of the additional variable v mined such that the second difficulty condition is satisfied.

Embodiments of the invention defined by claim 8 disclose a method to generate and use a unique persistent node identity for identifying and authenticating a node in a telecommunication network, further comprising:
- the initiator retrieving the unique persistent node identity or the restricted unique persistent node identity from storage;
- the initiator generating the initiator number-only-once or retrieving it from storage;
- the initiator calculating the corresponding first Diffie-Hellman value;
- the initiator transferring the retrieved generator value, the retrieved prime value, the calculated first Diffie-Hellman value and the retrieved initiator number-only-once to a subsequent responder;
- the subsequent responder verifying whether the first Diffie-Hellman value satisfies the first difficulty condition and if it does:
- the subsequent responder generating the responder number-only-once through the pseudo-random function of at least one of the first Diffie-Hellman value and the initiator number-only-once;
- the subsequent responder generating the second secret value;
- the subsequent responder calculating the second Diffie-Hellman value for the generator value, the second secret value and the prime value ;
- the subsequent responder transferring the second Diffie-Hellman value and the responder number-only-once to the initiator;
- the subsequent responder calculating a subsequent shared secret key value from the first Diffie-Hellman value, the second secret value and the prime value; and
- the initiator calculating the same subsequent shared secret key value from the second Diffie-Hellman value, the first secret value and the prime value.

Thus, the unique persistent identity or its restricted variant may be used to identify and authenticate the node with a subsequent responder which possibly does not have access to the same authentication server and does not possess the same root certificate as the initial responder. The initiator thereto retrieves the unique persistent identity or its restricted variant from storage: the generator value g, prime value p, first secret value a, possibly the initiator number-only-once Ni and possibly the environment variables, i.e. the time period identifier T, the zone identifier Z and the node type identifier G. If the initiator number-only-once Ni is not retrieved from storage then it is randomly generated. Next the initiator calculates the first Diffie-Hellman value A from the generator value g, the first secret value a and the prime value p. The initiator thereupon transfers the generator value g, prime value p, the first Diffie-Hellman value A and the initiator number-only-once Ni to the subsequent responder, for instance as part of an IKE_SA_INIT request message. The subsequent responder, who has also learned the first difficulty level Di upfront from the difficulty controller, verifies whether the first Diffie-Hellman value A satisfies the first difficulty condition. If this is the case, the subsequent responder switches to a specific procedure wherein a responder number-only-once Nr is calculated as pseudo-random function of at least one of the received first Diffie-Hellman value A and the received initiator number-only-once Ni, and possibly also of the time period, the zone, and the type of node. If an additional parameter v is used then the second secret value b may safely be generated by a second pseudo-random function of at least the additional parameter v, of at least one of the received first Diffie-Hellman value A and the received initiator number-only-once Ni, and possibly also of the time period, the zone, and the type of node; the value of the additional parameter v being mined by the subsequent responder such that a second difficulty condition is satisfied. The pseudo-random functions used for calculating the responder number-only-once Nr and possibly the second secret value b correspond to the pseudo-random functions used by the initial responder in the process to generate the unique persistent identity or restricted unique persistent identity. With the received generator value g, the received prime value p, and the second secret value b, the subsequent responder now calculates a second Diffie-Hellman value B. This second Diffie-Hellman value B and the responder number-only-once Nr are communicated to the initiator, for instance as part of an IKE_SA_INIT response message. Both the subsequent responder and the initiator can now calculate a same shared secret key value K without having to communicate this shared secret key value K to each other and without intermediate eavesdroppers being able to calculate K from the exchanged parameter values, even if the eavesdroppers would know the difficulty conditions, pseudo-random functions and environmental variables T, Z and G in use by the initiator and the responder. The subsequent responder calculates the subsequent shared secret key value K' from the second secret value b, the received first Diffie-Hellman value A and the prime value p. The initiator calculates the subsequent shared secret key value K' from the first secret value a, the received second Diffie-Hellman value B and the prime value p. The same subsequent shared secret key value K' will be found by both the initiator and the subsequent responder, ensuring that the subsequent responder will also be able to transmit and/or receive encrypted and integrity-verified traffic to/from the initiator.

Embodiments of the invention defined by claim 9 disclose a method to generate and use a unique persistent node identity for identifying and authenticating a node in a telecommunication network, further comprising:
- the initiator transferring to the responder or subsequent responder, further denoted the responder, Encapsulating Security Payload packets each comprising a security parameter index, a sequence number, a payload and an integrity check vector; and
- the responder verifying for each one of said Encapsulating Security Payload packets if the integrity check vector satisfies the first difficulty condition or a third difficulty condition, jointly referred to as a user plane difficulty condition,
and in case the integrity check vector satisfies the user plane difficulty condition:
- the responder enabling prolonged or extended services for the initiator;
- the initiator storing in relation to the generator value, the prime value, the first secret value also the initiator number-only-once, the security parameter index, the sequence number and the payload of an Encapsulating Security Payload packet whose integrity check vector satisfies the user plane difficulty condition to jointly form an extended unique persistent node identity.

Thus, a second stage is taking place in the user plane, when integrity-protected traffic is conveyed between the initiator and the responder, in so called Child Security Associations (CSA) needed to communicate over different networks or different technologies. The purpose is to determine a valid unique node identity with extra information or so called extended unique persistent node identity enabling prolonged access in time, access to wider parts of the network, to additional networks or access to more advanced services, better Quality of Service, or other privileges over other initiators not using an extended unique persistent node identity. Thereto, the initiator sends to the responder Encapsulating Security Payload (ESP) packets each comprising a security parameter index (SPI), a sequence number, a payload and an integrity check vector (ICV). The responder verifies if a user plane difficulty condition is satisfied by the integrity check vector (ICV). This user plane difficulty condition may for instance be identical to the above mentioned control plane difficulty condition, e.g. the integrity check vector must have a numerical value that is inferior to or equal to a first difficulty level Di. When the integrity check vector (ICV) satisfies the user plane difficulty condition, the initiator is granted access to prolonged or additional services or privileges over other initiators not using an extended unique persistent node identity. The initiator stores the extended unique persistent node identity by adding the initiator number-only-once Ni, security parameter index (SPI), sequence number, payload of the ESP packet, and integrity check vector (ICV) to the earlier stored unique node identity parameters g, p and a.

Embodiments of the invention defined by claim 10 disclose a method to generate and use a unique persistent node identity for identifying and authenticating a node in a telecommunication network, further comprising:
- the initiator storing the security parameter index, the sequence number, and the payload each time an Encapsulating Security Payload packet is transferred whose integrity check vector satisfies the user plane difficulty condition to herewith renew the extended unique persistent node identity.

Indeed, the extended unique persistent node identity may be renewed each time an ESP packet is generated and transferred that satisfies the user plane difficulty condition. During packet exchange, the initiator can thus continue to search new extended unique persistent node identities, and use these to get access to additional services like additional throughput, access to VPN, additional volume, etc.

Embodiments of the invention defined by claim 11 disclose a method to generate and use a unique persistent node identity for identifying and authenticating a node in a telecommunication network, further comprising:
- the initiator transferring to the (initial or subsequent) responder Encapsulating Security Payload packets each comprising a security parameter index, a sequence number, a payload and integrity check vector; and
- the responder verifying for each one of the Encapsulating Security Payload packets if the integrity check vector satisfies the user plane difficulty condition,
and in case the integrity check vector satisfies the user plane difficulty condition:
- the responder discarding the Encapsulating Security Payload packet whose integrity check vector satisfies the user plane difficulty condition, without delivering or transmitting the Encapsulating Security Payload packet onwards; and
- the responder enabling extended services for said initiator.

Hence, the extended unique persistent node identity may be used by the initiator in communication with the initial or subsequent responder to get access to extended services. The responder obtains from the difficulty controller the same user plane difficulty condition in order to be able to verify if the submitted extended unique persistent node identity satisfies this user plane condition. The ESP packet whose integrity check vector satisfies this user plane difficulty condition is not forwarded by the responder, e.g. to an IP router or HTTP server, but is discarded. It is in other words only used to grant the initiator access to extended or prolonged services.

Embodiments of the invention defined by claim 12 disclose a method to generate and use a unique persistent node identity for identifying and authenticating a node in a telecommunication network, further comprising:
- the initiator randomly generating a new first secret value;
- the initiator transferring to the subsequent responder an Encapsulating Security Payload packet comprising a security parameter index, a sequence number, an encrypted payload comprising a new first Diffie-Hellman value for the new first secret value, and an integrity check vector;
- the initiator noticing when the new first Diffie-Hellman value satisfies the first difficulty condition;
- the responder or the subsequent responder, further denoted "the responder" verifying for the Encapsulating Security Payload packet if the integrity check vector satisfies the user plane difficulty condition;
and in case the new Diffie-Hellman value A' satisfies the first difficulty condition and/or the integrity check vector satisfies the user plane difficulty condition:
- the responder optionally generating a new responder number-only-once through a pseudo-random function of at least one of the new first Diffie-Hellman value and the initiator number-only-once;
- the responder generating a new second secret value either randomly or through a pseudo-random function of at least one of the new first Diffie-Hellman value and the initiator number-only-once;
- the responder calculating a renewed shared secret key value from the new first Diffie-Hellman value, the new second secret value and the prime value;
- the responder calculating a new second Diffie-Hellman value for the new second secret value;
- the responder transferring the new second Diffie-Hellman value for the new second secret value to the initiator;
- the responder transferring the new responder number-only-once to the initiator if a new responder number-only-once was generated by the responder;
- the initiator calculating a renewed shared secret key value from the new second Diffie-Hellman value, the new first secret value and the prime value; and
- if the new first Diffie-Hellman value satisfies said first difficulty condition, the initiator storing the generator value, the prime value and the new first secret value to jointly form a renewed unique persistent node identity.

This way, the secret shared secret key value K (established with an initial responder) or the subsequent shared secret key value K' (established with a subsequent responder) is replaced with a renewed shared secret key value K" to ensure Perfect Forward Secrecy (PFS), i.e. protection against future attackers having discovered K" and wishing to decrypt recorded past communication encrypted based on K or K'. Thereto, the initiator continuously verifies if a new first Diffie-Hellman value A' satisfies the first difficulty condition imposed by the network. To calculate the new first Diffie-Hellman value A', the initiator needs the generator value g of the Diffie-Hellman group, the prime value p for the Diffie-Hellman algorithm, and a new first secret value a' that is randomly generated. The initiator further generates an Encapsulating Security Payload packet comprising a security parameter index, a sequence number, an encrypted payload comprising the new first Diffie-Hellman value A' for the new first secret value a', and an integrity check vector, and sends the packet to the responder. The responder verifies if the integrity check vector (ICV) of the Encapsulating Security Payload packet satisfies the user plane difficulty condition. If this is the case, the responder switches to a specific procedure wherein a new second secret value b' and a responder number-only-once Nr' are calculated as pseudo-random functions of at least one of the received new first Diffie-Hellman value A' and the received initiator number-only-once Ni. Alternatively the new second secret value b' may be chosen randomly by the responder. With the received generator value g, the received prime value p, and the new second secret value b', the responder now calculates a new second Diffie-Hellman value B'. This new second Diffie-Hellman value B' is communicated to the initiator. Both the responder and the initiator can now calculate a same renewed shared secret key value K" without having to communicate this renewed shared secret key value K" to each other, and without eavesdroppers being able to compute K" since these eavesdroppers cannot see the exchanged Diffie-Hellman values nor compute b'. The responder calculates the renewed shared secret key value K" from the received new first Diffie-Hellman value A', the new second secret value b' and the prime value p. The initiator calculates the renewed shared secret key value K" from the new first secret value a', the received new second Diffie-Hellman value B' and the prime value p. At the initiator side, the generator value g, prime value p and new first Diffie-Hellman value A' are stored to jointly form a renewed unique persistent identity for that node. Thanks to the renewed node identity and renewed shared secret key value K", the initiator can continue to communicate with the subsequent responder but a future attacker discovering K" will not be able to decrypt recorded past communication that has been encrypted with key K or K'. The additional ongoing effort spent by the initiator to generate ESP packets whose integrity check vector satisfies the user plane difficulty condition consequently allows to preserve Perfect Forward Secrecy (PFS) such that a future attacker cannot discover a long term persistent private key and then decrypt past communications.

Embodiments of the invention defined by claim 13 disclose a method to generate and use a unique persistent node identity for identifying and authenticating a node in a telecommunication network, further comprising:
- the initiator assessing whether the new responder number-only-once value is resulting from applying the first pseudo-random function to at least one of the new first Diffie-Hellman value and the initiator number-only-once in order to decide whether to continue to communicate with the responder or which information to send to the responder, and/or
- the initiator assessing whether the new second Diffie-Hellman value is resulting from applying the second pseudo-random function to at least one of the new first Diffie-Hellman value and the initiator number-only-once in order to decide whether to continue to communicate with the responder or which information to send to the responder, and/or
- the initiator assessing whether the new second Diffie-Hellman value satisfies the second difficulty condition in order to decide whether to continue to communicate with the responder or which information to send to the responder.
- the initiator assessing whether the renewed shared secret key value K" satisfies the second difficulty condition in order to decide whether to continue to communicate with the responder or which information to send to the responder.

Indeed, as mentioned above, an important aspect of the present method to generate a renewed unique persistent node identity resides in the fact that the initiator can trust the subsequent responder and decide to communicate with the subsequent responder as well as which information to send to the subsequent responder.

In embodiments of the method to generate and use a unique persistent node identity for identifying and authenticating a node in a telecommunication network according to the invention, defined by claim 14, the responder generates at least one of the new responder number-only-once Nr' and the new second secret value through a pseudo-random function of at least one of the new first Diffie-Hellman value and the initiator number-only-once, and furthermore of one or more of:
- a time period identifier representing a time period; and
- a zone identifier representing a zone, i.e. a group of networks, a network or a part of a network; and
- a node type identifier representing a group of nodes,
and wherein the initiator stores the generator value, the prime value, the new first Diffie-Hellman value, the initiator number-only-once and respectively the time period identifier, the zone identifier and/or the node type identifier to jointly form a renewed restricted unique persistent node identity which is only significant within the time period, the zone and/or the node group.

Thus, when the new second secret value b' is determined as the result of a pseudo-random function applied on information received from the initiator and environmental variables known by the parties, a predictable new second Diffie-Hellman value B' can be returned by the subsequent responder to the initiator, enabling to generate a renewed shared secret key value K" whose use can be restricted. In case the environmental variables comprise a time zone identifier T, the use of the node identity can be restricted to a particular time period. In case the environmental variables comprise a zone identifier Z, the use of the node identity can be restricted to a particular zone, e.g. a group of networks like all mobile 3GPP networks in South-Korea, a single network like the mobile 3GPP network of a single mobile operator in South-Korea, or even a portion of a network. In case the environmental variables comprise a node type identifier G, the use of the node identity can be restricted to a particular type of nodes, e.g. a particular group of endpoints sharing similar characteristics like for instance cars, refrigerators, flowerpots, etc. Obviously, a combination of environmental parameters as input for the pseudo-random function enables to refine the restriction imposed on the use of the renewed node identity, e.g. to South-Korean refrigerators for a time span of 6 months. In any of those cases, the environmental variables T, Z, G must be stored together with the generator value g, the prime value p, the new first Diffie-Hellman value A' and the initiator number-only-once Ni to jointly form the renewed unique persistent node identity with restricted use.

In addition to a method as defined by claim 1, embodiments of the present invention also concern an initiator node as defined by claim 15, configured to perform steps of the method of one of claims 1-14.

Similarly, embodiments of the present invention concern a responder node as defined by claim 16, configured to perform steps of the method of one of claims 1-14.

### Brief Description of the Drawings

Fig. 1 illustrates an amended IKE session generating a unique persistent node identity or restricted unique persistent node identity according to an embodiment of the present invention;
Fig. 2 illustrates an amended IKE session reusing a unique persistent node identity or restricted unique persistent node identity with a subsequent responder according to an embodiment of the present invention;
Fig. 3 illustrates an amended IKE session generating a Child Security Association for a unique persistent node identity according to an embodiment of the present invention;
Fig. 4 illustrates a message sequence to generate an extended unique persistent node identity according to an embodiment of the present invention;
Fig. 5 illustrates a message sequence to reuse of an extended unique persistent node identity with a subsequent responder according to an embodiment of the present invention;
Fig. 6 illustrates a message sequence to renew a unique persistent node identity according to an embodiment of the present invention; and
Fig. 7 illustrates a computing system suitable for hosting the initiator or responder according to the present invention and suitable for implementing the method for generating and using a unique persistent node identity according to the present invention.

### Detailed Description of Embodiment(s)

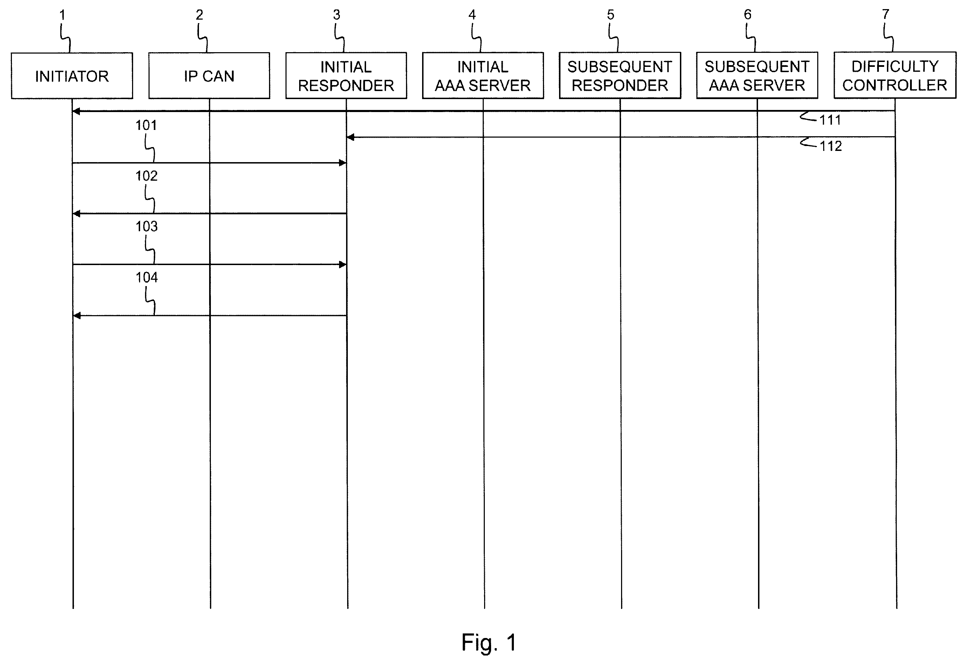

Fig. 1 shows the amended sequence of Internet Key Exchange (IKE) messages that implements the generation of a unique persistent node identity or restricted unique persistent node identity according to an embodiment of the invention. The sequence requires minor adaptations to existing IKE messages and consequently can be implemented readily for granting access to services that nowadays rely on IKE as specified in IETF RFC 7296 like for instance VPN access, Wi-Fi calls, Cisco checkpoint sessions, etc.

Fig. 1 depicts the different entities that play a role in establishing Security Associations over a wired or wireless Internet Protocol Connectivity Access Network. The initiator 1 of the Security Association can be any node, for instance an endpoint like a user device, object or sensor, but also an intermediate node like a gateway, switch or router, desiring to authenticate in order to get access to certain services. IP CAN 2 represents an IP Connectivity Access Network, i.e. a wireline or wireless Internet Protocol based communication network, like for instance a wireless local area network (WLAN). The initial responder 3 is the authenticator of the Security Association, i.e. the IPSec security gateway that decrypts traffic towards the initiator 1. The Initial AAA server 4 is the Authentication, Authorization and Accounting server that generates the billing information for the initial Security Association. Fig. 1 further shows a subsequent responder 5, i.e. the IPSec security gateway that authenticates a subsequent Security Association initiated by the initiator 1. The subsequent AAA server 6 is the Authentication, Authorization and Accounting server that generates the billing information for this subsequent Security Association. At last, the difficulty controller 7 represents a central server or unit that manages and distributes the difficulty conditions that impose a calculation effort on the initiator 1 and possibly also on the responders 3, 5 involved in the method to generate a unique persistent identity or restricted unique persistent identity for the initiator 1.

The establishment of a Security Association typically consists of Layer 2 or L2 attachment between the initiator 1 and the IP CAN 2, e.g. via the IEEE 802.11 protocol, authentication and authorization between the initiator 1 and the IP CAN 2, e.g. via the EAPOL protocol, allocation of the IP address and other parameters between the initiator 1 and IP CAN 2, e.g. via the DHCP protocol, establishment and closure of the initial Security Association between the initiator 1 and initial responder 3, wherein the initial responder 3 consults the initial AAA server 4 for SIM based, certificate based or username/password based authentication, and establishment of a subsequent Security Association between the initiator 1 and subsequent responder 5, wherein the subsequent responder 5 consults the subsequent AAA server 6 for SIM based, certificate based or username/password based authentication. Fig. 1 shows the sequence of messages for the establishment and closure of the initial Security Association between the initiator 1 and initial responder 3 in an embodiment of the invention that relies on IKE messages.

Prior to the sequence of IKE messages, the initiator 1 obtains from the difficulty controller 7 the first difficulty condition and possibly also the second difficulty condition. This is indicated by arrow 111. The first difficulty condition requires the difficulty controller 7 to communicate a first difficulty level Di to the initiator 1. The second difficulty condition, which is optional, requires the difficulty controller 7 to communicate a second difficulty level Dr to the initiator 1. As is further indicated by arrow 112, also the initial responder 3 obtains the first difficulty level Di and optionally the second difficulty level Dr from the difficulty controller 7. The first difficulty condition shall impose a calculation effort on the initiator 1 in order to successfully generate a valid unique persistent node identity. The optional second difficulty condition shall impose a calculation effort on the initial responder 3 in order to successfully generate a valid unique persistent node identity.

The process to generate the unique persistent node identity starts with the initiator 1 selecting a generator value g from the Diffie-Hellman group, a prime value p, and a secret value a. These values g, p and a are used by the initiator 1 to calculate a first Diffie-Hellman value A = g^{a} mod p, and this step is repeated by the initiator until the first Diffie-Hellman value A satisfies the first difficulty condition. The first difficulty condition in the example of Fig. 1 for instance requires that the first Diffie-Hellman value is numerically inferior to or equal to Di. In addition to mining values g, p and a that satisfy the first difficulty condition, the initiator 1 also randomly generates an initiator number-only-once Ni or retrieves it from storage. Thereupon, the initiator 1 sends an IKE_SA_INIT Request message 101 to the initial responder 3. This message 101 comprises a header, a Security Association identifier field, a Key Exchange field wherein the prime value p, the generator value g and the first Diffie-Hellman value A are embedded, and a Nonce field wherein the initiator number-only-once Ni is embedded. Upon receipt of message 101, the initial responder 3 verifies if the first Diffie-Hellman value A satisfies the first difficulty condition, i.e. whether A <= Di, and if this is the case, the initial responder 3 enters a specific mode or state wherein a second secret value b and a responder number-only-once Nr are generated in accordance with the present invention. More particularly, the second secret value b is generated randomly. However the responder number-only-once Nr is generated as a first pseudo-random function of at least one of the received first Diffie-Hellman value A and the received initiator number-only-once Ni. The use of a pseudo-random function for the calculation of the responder number-only-once enables portability to other networks as will be explained further below. The second secret value b, the received prime value p, and the received generator value g are thereafter used by the initial responder 3 to calculate a second Diffie-Hellman value B = g^{b} mod p. The initial responder 3 then sends an IKE_SA_INIT Response message 102 to the initiator 1. This message 102 comprises a header, a Security Association identification field, a Key Exchange field wherein the second Diffie-Hellman value B is embedded, and a Nonce field wherein the responder number-only-once Nr is embedded. The initial responder 3 calculates a secret key K from the second secret value b, the received first Diffie-Hellman value A and the prime value p through the formula K = A^{b} mod p. The initiator 1 can calculate the exact same secret key K from the first secret value a, the received second Diffie-Hellman value B and the prime value p through the formula K = B^{a} mod p. The initiator 1 and initial responder 3 hence generate a shared secret key value K without communicating the random secret values a and b, and hence without enabling intermediate eavesdroppers to reproduce the secret key K. The secret key K is the result of certain calculation effort by the initiator 1 imposed by the difficulty controller 7, and the generation of a subsequent secret key K' can be performed by initiator 1 and by a subsequent responder 5 later on, for instance to authenticate with a different network. At the initiator 1, the generator value g, prime value p and first secret value a are stored to jointly form a unique persistent node identity.

The initiator 1 builds trust in the initial responder 3 by verifying if the received responder number-only-once Nr indeed results from applying the first pseudo-random function to at least one of the first Diffie-Hellman value A and the initiator number-only-once Ni, If this is the case, the initiator 1 trusts the initial responder 3 and decides to communicate with the responder 3 as well as which information to share with the responder 3. Fig. 1 shows the communication of a traditional IKE_AUTH Request message 103 and a traditional IKE_AUTH Response message 104 wherein the initiator 1 and initial responder 3 negotiate a child Security Association to further communicate. It is noticed that these messages 103 and 104 can be simplified in the case where both the first Diffie-Hellman value A and second Diffie-Hellman value B respectively satisfy the first difficulty condition and the second difficulty condition. Alternatively it may be the secret key K which satisfies the second difficulty condition.

It is noticed that in variant embodiments of the above described sequence to generate a unique persistent node identity, the pseudo-random function used by the initial responder 3 to determine the responder number-only-once Nr uses additional, environmental parameters as input. These environmental parameters may for instance comprise a time period identifier T indicative for a limited period in time wherein the unique persistent node identified will be valid. The environmental parameters alternatively or supplementary may comprise a zone identifier Z indicative for a zone, i.e. a group of networks, a single network or a part of a network, wherein the unique persistent node identity will be valid. Further alternatively or supplementary, the environmental parameters may comprise a node type identifier G indicative for a group or type of nodes that can validly use the unique persistent node identity, e.g. cars, refrigerators, flower pots, ... The environmental parameters must be stored by the initiator 1 together with the generator value g, prime value p and first secret value a to jointly form a restricted unique persistent node identity that can be used restrictively to identify for instance only objects of a certain type with a particular network within a limited time period.

In order to impose also certain calculation effort on the responder 3 and to reduce the risk for spoofing attacks by fake responders, the first pseudo-random function is used by the initial responder 3 to determine the responder number-only-once Nr, and a second pseudo-random function is used by the initial responder 3 for calculation of the second secret value b. In order to prevent eavesdroppers computing secret key K the second pseudo-random function must have an additional input parameter v whose value must be mined by the initial responder 3 such that a second difficulty condition is satisfied by the second Diffie-Hellman value B. The second difficulty condition may for instance require that the second Diffie-Hellman value B is numerically inferior or equal to the second difficulty threshold Dr that in this embodiment must be upfront communicated to the initial responder 3 and the initiator 1. The initiator 1 will be able to verify if the received second Diffie-Hellman value B satisfies the second difficulty condition and use the outcome of this assessment in its decision to communicate with the initial responder 3 or not, and its decision what information to share with the initial responder 3. Although not necessary, the additional variable value v may be stored by the initial responder 3. Alternatively or additionally the second difficulty condition may be imposed on the secret key K.

It is noticed that the difficulty levels, i.e. Di and Dr in the above described embodiment, are under control of the difficulty controller 7 that is assumed to be managed by a trusted entity. The difficulty levels may vary over time. When for instance processing capacity of computers, servers, etc. has evolved as a result of which the computational capacity needed to satisfy the difficulty condition(s) has gone down or the price of such computational capacity has gone down, the difficulty level(s) imposed on the initiator and responder may be increased in order to keep the value of a unique persistent node identity according to the present invention stable. This way, unique persistent node identities generated in line with the present invention can be traded at limited market price volatility while a trusted entity stays in charge of monitoring and controlling the value.

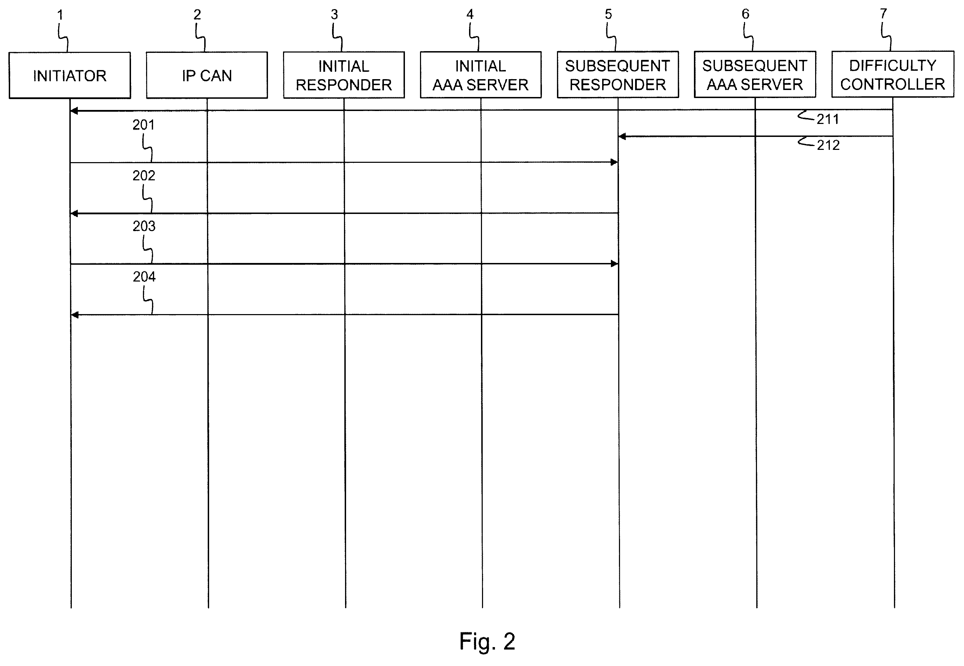

Fig. 2 shows the sequence of messages transferred when the initiator 1 is reusing its unique persistent node identity to authenticate with subsequent responder 5. Upfront, the difficulty controller 7 has informed the initiator on the first difficulty condition and possibly the second difficulty condition. Message 211 consequently may be identical to message 111, containing the first difficulty level Di and possible the second difficulty level Dr. Also the subsequent responder 3 is informed on the first difficulty condition and possibly the second difficulty condition. Via message 212, the difficulty controller 7 informs the subsequent responder 5 on the first difficulty level Di and the possibly the second difficulty level Dr. The initiator 1 retrieves the unique persistent identity from storage. In other words, the initiator 1 retrieves the generator value g, prime value p and first secret value a from storage. In the case where a restricted unique persistent node identity was stored, the initiator 1 also retrieves the corresponding environment parameters T and/or Z and/or G from storage. Thereupon, the initiator 1 sends an IKE_SA_INIT Request message 201 to the subsequent responder 5. Message 201 comprises a header, a Security Association identifier, a Key Exchange field containing the generator value g, prime value p and first Diffie-Hellman value A, and a Nonce field containing the initiator number-only-once Ni. Upon receipt of message 201, the subsequent responder 5 verifies if the received first Diffie-Hellman value A satisfies the first difficulty condition. If this is the case, the subsequent responder 5 enters a mode or state wherein a responder number-only-once Nr are generated as pseudo-random function of at least one of the received first Diffie-Hellman value A and received initiator number-only-once Ni. The pseudo-random function used by the subsequent responder 5 to calculate the responder number-only-once Nr is identical to the pseudo-random function used by the initial responder 3 in the above described process. With the received first Diffie-Hellman value A, the received prime value p and the generated second secret value b, the subsequent responder 5 thereupon calculates a second Diffie-Hellman value B through the formula B = A^{b} mod p. In case of a restricted unique persistent node identity, the subsequent responder 5 shall also use the time period T and/or the zone Z and/or the node type G as input values for the pseudo-random values that determine the second secret value b and the responder number-only-once Nr. Thereafter, the subsequent responder 5 sends an IKE_SA_INIT Response message 202 to the initiator 1. Message 202 comprises a header, a Security Association identifier, a Key Exchange field containing the second Diffie-Hellman value B, and a Nonce field containing the responder number-only-once Nr. The subsequent responder 5 can calculate a secret key K = A^{b} mod p and the initiator 1 can calculate the exact same secret key K = B^{a} mod p, while the initiator 1 and subsequent responder 5 did not communicate the random secret values a and b hence preventing that intermediate eavesdropping allows to produce secret key K.

It is noticed that an additional parameter v may be used as input for a second pseudo-random function that generates the second secret value b, the value of the parameter v being mined by the subsequent responder 5 such that a second difficulty condition is satisfied. The second difficulty condition may for instance impose that the second Diffie-Hellman value B corresponding to the second secret value b is numerically inferior or equal to the second difficulty level Dr upfront communicated by the difficulty controller 7. The initiator 1 can verify if the received second Diffie-Hellman value B satisfies the second difficulty condition. This way, authentication with the subsequent responder 5 imposes calculation effort on the subsequent responder 5 reducing the risk for spoofing attacks through fake responders. Alternatively or additionally the second difficulty condition may be imposed on the secret key K.

At last, a traditional IKE_AUTH Request message 203 is sent from the initiator 1 to the subsequent responder 5, and a traditional IKE_AUTH Reply message 204 is sent from the subsequent responder 5 to the initiator 1 to negotiate a child Security Association for further communication. It is noticed that these messages 203 and 204 can be simplified in the case where both the first Diffie-Hellman value A and second Diffie-Hellman value B or the secret key K respectively satisfy the first difficulty condition and the second difficulty condition.

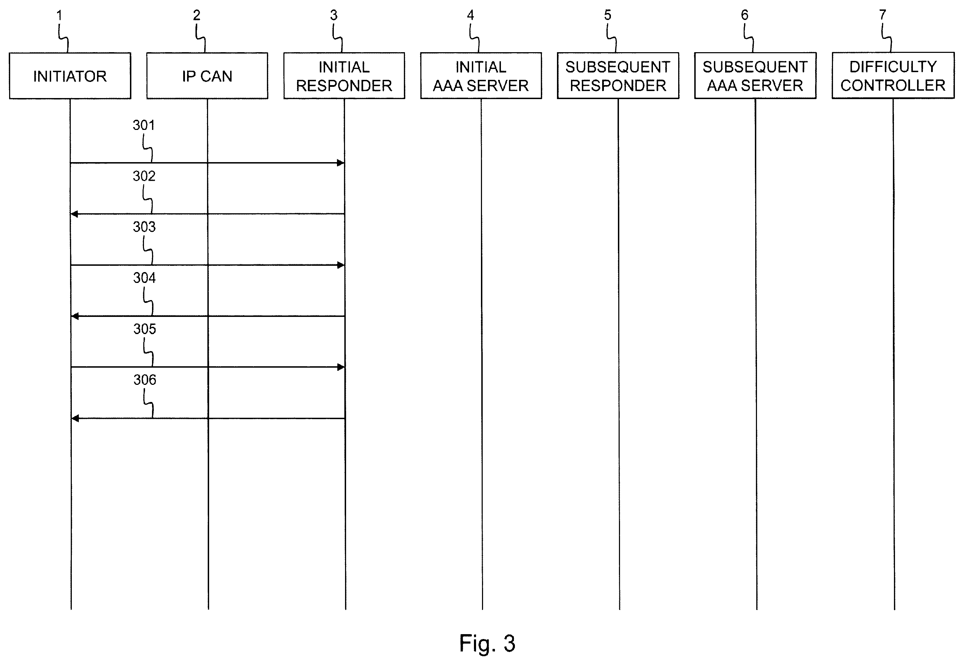

Fig. 3 illustrates the message sequence generating a child Security Association for a unique persistent node identity according to an embodiment of the present invention. The messages 301, 302, 303 and 304 communicated between the initiator 1 and the initial responder 3 may be assumed identical to the messages 101, 102, 103 and 104 in the above described process for generating a unique persistent node identity. In addition thereto, the initiator 1 sends a traditional IKE CREATE_CHILD_SA Request message 305 to the initial responder 3 and the initial responder replies with a traditional IKE CREATE_CHILD_SA Response message 306 as a result of which a child Security Association is generated.

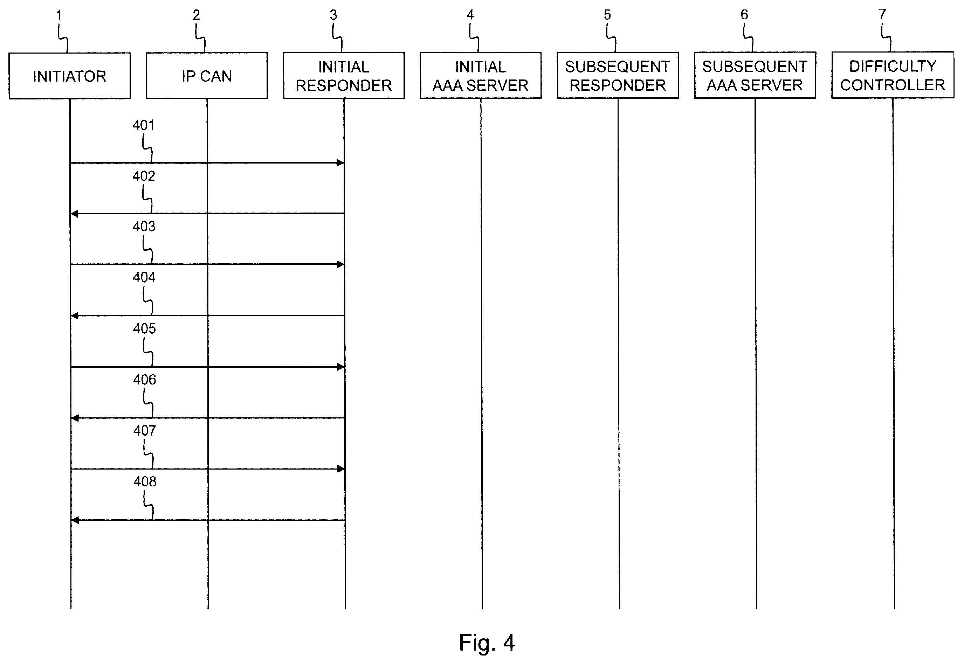

Fig. 4 shows the sequence of messages shared between the initiator 1 and initial responder 3 in order to generate an extended unique persistent node identity according to an embodiment of the present invention. The extended unique persistent node identity protects the network from the attack where the generator value g, prime value p, and first secret value a may have been sold multiple times. In order to protect the network of responders against such attacks, the unique persistent identity in a second stage which takes place in the user plane, i.e. when integrity-protected traffic is conveyed between the initiator 1 and initial responder 3 in a so-called child Security Association, is extended with a second part. This second part is an exceptional Internet Protocol (IP) packet or payload of a message whose integrity check vector (ICV) satisfies a user plane difficulty condition. The user plane difficulty condition may for instance be identical to the first difficulty condition, e.g. the ICV must be numerically inferior or equal to the first difficulty level Di, or alternatively may be a different condition imposed by the difficulty controller 7. The messages 401, 402, 403, 404, 405 and 406 of Fig. 4 are identical to the respective messages 301, 302, 303, 304, 305 and 306 in Fig. 3. The arrow 407 from the initiator 1 to the initial responder 3 refers to the transfer of Encapsulating Security Payload (ESP) packets in the user plane. Similarly, the arrow 408 from the initial responder 3 to the initiator 1 refers to the transfer of ESP packets in the user plane. Each ESP packet contains a security parameter index, an initiator sequence number, a payload and an integrity check vector (ICV). The payload may for instance be an IP packet. Upon receipt of each ESP packet 407, the initial responder 3 verifies if the integrity check vector (ICV) thereof satisfies the user plane difficulty condition. As soon as this is the case, the initial responder 3 enables extended services like for instance VPN access, additional throughput, additional volume, etc. for the initiator 1. The initiator 1 stores in addition to the generator value g, the prime value p and the first secret value a also the initiator number-only-once Ni, the security parameter index, sequence number and payload of the exceptional ESP packet whose integrity check vector satisfies the user plane difficulty condition. These values jointly form the extended unique persistent node identity that grants the initiator 1 extra privileges like access to additional services.

It is noticed that the above process wherein ESP packets sent by the initiator 1 are scanned by the initial responder 3 for integrity check vectors that satisfy the user plane difficulty condition can be continued. Each time an exceptional ESP packet is detected whose integrity check vector satisfies the user plane difficulty condition, the corresponding security parameter index, sequence number and payload of that exceptional ESP packet can be stored together with the initiator number-only-once Ni to form an additional or renewed extended unique persistent node identity together with the generator value g, prime value p, and first secret value a. Each such additional or renewed extended unique persistent node identity may grant additional privileges to the initiator 1, like for instance additional bandwidth, additional download capacity, etc. By contrast nodes not presenting the extended unique persistent node identity may lose privileges and over time be locked out of the network.

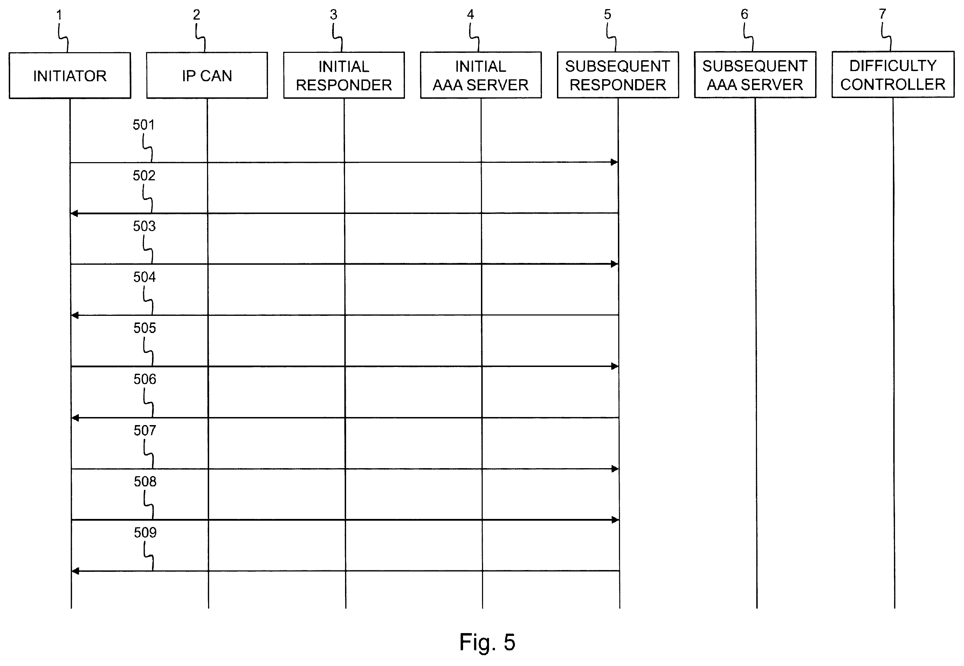

Fig. 5 shows the sequence of messages when using an extended unique persistent node identity with a subsequent responder 5 according to an embodiment of the present invention. The messages 501, 502, 503 and 504 are identical to respective messages 201, 202, 203 and 204 that are shared between the initiator 1 and subsequent responder in the above described process where a (non-extended) unique persistent node identity is used to authenticate the initiator 1 with the subsequent responder 5, or where alternatively a (non-extended) restricted unique persistent node identity is used to authenticate the initiator 1 with the subsequent responder 5. This non-extended unique persistent node identity will result in the initiator 1 being granted basic services like connectivity and basic throughput. Thereafter, the initiator sends a traditional CREATE_CHILD_SA Request message 505 and the subsequent responder replies with a traditional CREATE_CHILD_SA Response message 506 in order to generate a so called child Security Association that will be used for further communication between the initiator 1 and subsequent responder 5. In the user plane, i.e. when integrity-protected traffic is communicated between the initiator 1 and subsequent responder 5, the initiator sends Encapsulating Security Payload (ESP) packets, e.g. 507, 508, to the subsequent responder 5, and the subsequent responder 5 sends ESP packets, e.g. 509, to the initiator 1. The subsequent responder 5 however remains in a state or mode where it scans received ESP packets for integrity check vectors that satisfy the user plane difficulty condition. In case an ESP packet 507 is received whose integrity check vector does not satisfy the user plane difficulty condition, this ESP packet is forwarded by the subsequent responder 5, for instance to an IP server or router. In case an ESP packet 508 is received whose integrity check vector satisfies the user plane difficulty condition, the ESP packet is discarded without being forwarded to an IP server, but the receipt of such ESP packet grants additional privileges or services to the initiator 1.

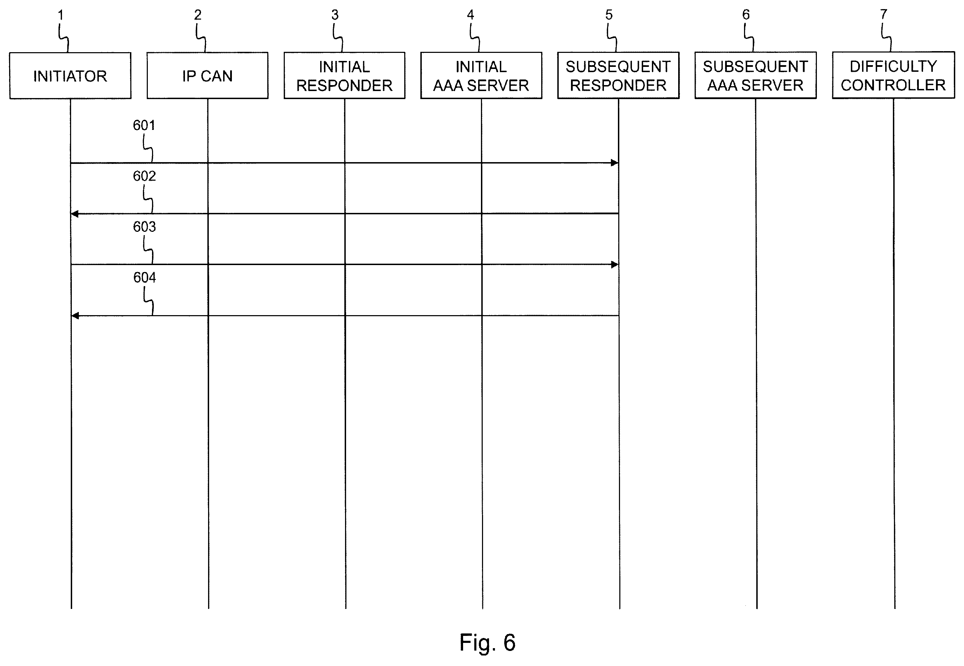

Fig. 6 shows a sequence of messages enabling to renew a unique persistent node identity according to an embodiment of the present invention. Such renewed unique persistent node identity provides Perfect Forward Secrecy (PFS), i.e. protection against a future attacker who may discover a long term persistent key K and be able to decrypt past communications. Traditional IKE rekeying is not a solution as the new key K' obtained this way would most likely not be numerically inferior or equal to Dr and consequently not satisfy the second difficulty condition. Therefore, the new key K' should be computed during the ESP packet exchanges even while the initiator remains the same, and an attacker examining the recording of the initiator's encrypted sessions should not be able to notice a replacement of key K by new key K'. This is achieved through the message sequence depicted in Fig. 6. The initiator 1 randomly generates a new first secret value a'. The initiator 1 thereupon sends an ESP packet 601 to subsequent responder 5. This ESP packet 601 comprises a security parameter index, a sequence number, an encrypted payload comprising the new first Diffie-Hellman value A' = g^{a'} mod p, and an integrity check vector (ICV). The subsequent responder 5 monitors received ESP packets like 601 for integrity check vectors that satisfy the user plane difficulty condition. When the integrity check vector of ESP packet 601 does not satisfy the user plane difficulty condition, the subsequent responder 5 strips and discards the new Diffie-Hellman value A' from the payload, and processes and delivers the remainder of the payload of the ESP packet 601. Arrow 602 denotes an ESP packet sent from the subsequent responder 5 to the initiator 1. This ESP packet 602 comprises a security parameter index, a responder sequence number, an encrypted payload comprising the second Diffie-Hellman value B, and an integrity check vector. Optionally, the initiator 1 may scan for ESP packets whose integrity check vector satisfies a second user plane difficulty condition. As soon as an ESP packet 603 is sent whose integrity check vector satisfies the user plane difficulty condition, the subsequent responder 5 generates a new second secret value b' as a second pseudo-random function of at least one of the new first Diffie-Hellman value A' and the initiator number-only-once Ni. Thereupon, the subsequent responder 5 calculates a new second Diffie-Hellman value B' using the generator value g, prime value p and new second secret value b' through the formula B' = g^{b'} mod p. This new second Diffie-Hellman value B' is communicated to the initiator 1 as part of the payload of a new ESP packet 604 that is sent from the subsequent responder 5 to the initiator 1. This ESP packet 604 comprises a security parameter index, a responder sequence number, an encrypted payload comprising the new second Diffie-Hellman value B' and an integrity check vector. Upon receipt of this ESP packet 604, the initiator 1 verifies whether the new second Diffie-Hellman value B' results from applying the pseudo-random function to at least one of the new first Diffie-Hellman value A' and the initiator number-only-once Ni and/or the initiator 1 verifies whether the second Diffie-Hellman value satisfies the second difficulty condition in order to re-establish trust in the subsequent responder 5 and consequently to decide to further communicate with the subsequent responder 5 or not, and which information to share with the subsequent responder 5. The subsequent responder 5 can calculate a new secret key value K' from the new first Diffie-Hellman value A', the new second secret value b' and the prime value p as K' = A'^{b'} mod p. The initiator 1 can calculate the exact same new secret key value K' from the received new second Diffie-Hellman value B', the new first secret value a' and the prime value p as K' = B'^{a'} mod p. The initiator 1 also stores the generator value g, prime value p new first secret value a' and the initiator number-only-once Ni to jointly form the renewed unique persistent endpoint identity.

Optionally, the second pseudo-random function that generates the new second Diffie_Hellman value B' may have as input environmental parameters such as a time period identifier T, a zone identifier Z, and a node type identifier G that may respectively restrict the use of the renewed key K' to a certain time period, and/or geographical zone encompassing a group of networks, a single network or part of a network, and/or type of node. The initiator 1 shall store any of those environmental parameters T and/or Z and/or G together with the generator value g, prime value p, new first secret value a' and initiator number-only-once Ni to jointly form a renewed restricted unique persistent node identity.

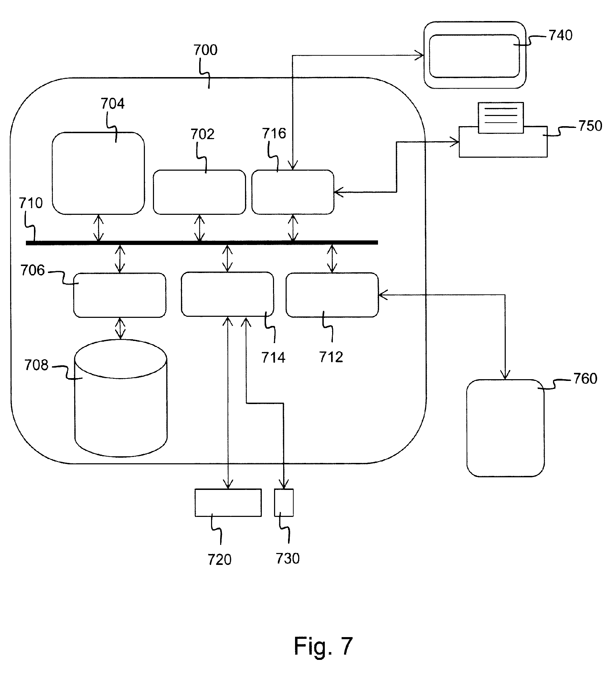

Fig. 7 shows a suitable computing system 700 for hosting the initiator or responder according to the present invention and suitable for implementing the method for generating and using a unique persistent node identity according to the present invention, embodiments of which are drawn in Fig. 1 - Fig 6. Computing system 700 may in general be formed as a suitable general purpose computer and comprise a bus 710, a processor 702, a local memory 704, one or more optional input interfaces 714, one or more optional output interfaces 716, a communication interface 712, a storage element interface 706 and one or more storage elements 708. Bus 710 may comprise one or more conductors that permit communication among the components of the computing system. Processor 702 may include any type of conventional processor or microprocessor that interprets and executes programming instructions. Local memory 704 may include a random access memory (RAM) or another type of dynamic storage device that stores information and instructions for execution by processor 702 and/or a read only memory (ROM) or another type of static storage device that stores static information and instructions for use by processor 704. Input interface 714 may comprise one or more conventional mechanisms that permit an operator to input information to the computing device 700, such as a keyboard 720, a mouse 730, a pen, voice recognition and/or biometric mechanisms, etc. Output interface 716 may comprise one or more conventional mechanisms that output information to the operator, such as a display 740, a printer 750, a speaker, etc. Communication interface 712 may comprise any transceiver-like mechanism such as for example two 1 Gb Ethernet interfaces that enables computing system 700 to communicate with other devices and/or systems, for example mechanisms for communicating with one or more other computing systems. The communication interface 712 of computing system 700 may be connected to such another computing system 760 by means of a local area network (LAN) or a wide area network (WAN), such as for example the internet, in which case the other computing system may for example comprise a suitable web server. Storage element interface 706 may comprise a storage interface such as for example a Serial Advanced Technology Attachment (SATA) interface or a Small Computer System Interface (SCSI) for connecting bus 710 to one or more storage elements 708, such as one or more local disks, for example 1 TB SATA disk drives, and control the reading and writing of data to and/or from these storage elements 808. Although the storage elements 708 above is described as a local disk, in general any other suitable computer-readable media such as a removable magnetic disk, optical storage media such as a CD or DVD, -ROM disk, solid state drives, flash memory cards, ... could be used.

The steps executed in the method for generating and using a unique persistent node identity according to the present invention, illustrated by the above embodiments, may be implemented as programming instructions stored in local memory 704 of the computing system 700 for execution by its processor 702. Alternatively the instructions may be stored on the storage element 708 or be accessible from another computing system through the communication interface 712.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method to generate and use a unique persistent node identity for identifying and authenticating a node (1) in a telecommunication network (2), said method comprising generating a shared secret key value K through a computational algorithm with a difficulty condition (111, 112) limiting the number of valid node identities.

2. The method according to claim 1, comprising:
- an initiator (1) selecting a generator value g of the Diffie-Hellman group, a prime value p for the Diffie-Hellman algorithm, and a first secret value a for which the corresponding first Diffie-Hellman value A satisfies a first difficulty condition (111,112);
- said initiator (1) generating or retrieving an initiator number-only-once Ni;
- said initiator (1) transferring (101) said generator value g, said prime value p, said first Diffie-Hellman value A and said initiator number-only-once Ni to a responder (3);
- said responder (3) verifying whether said first Diffie-Hellman value A satisfies said first difficulty condition (111, 112) and if it does:
- said responder (3) generating a responder number-only-once Nr through a pseudo-random function of at least one of said first Diffie-Hellman value A and said initiator number-only-once Ni;
- said responder (3) generating a second secret value b;
- said responder (3) calculating a second Diffie-Hellman value B for said generator value g, said second secret value b and said prime value p - said responder (3) transferring (102) said second Diffie-Hellman value B and said responder number-only-once Nr to said initiator (1);
- said initiator (1) storing said generator value g, said prime value p and said first secret value a to jointly form said unique persistent node identity;
- said responder (3) calculating said shared secret key value K from said first Diffie-Hellman value A, said second secret value b and said prime value p; and
- said initiator (1) calculating said same shared secret key value K from said second Diffie-Hellman value B, said first secret value a and said prime value p.

3. The method according to claim 2, further comprising:
- said initiator (1) assessing whether said responder number-only-once Nr is resulting from applying said pseudo-random function to at least one of said first Diffie-Hellman value A and said initiator number-only-once Ni in order to decide whether to communicate with said responder (3) or which information to send to said responder (3).

4. The method according to claim 2, wherein said responder (3) generates said responder number-only-once Nr through a pseudo-random function of at least one of said first Diffie-Hellman value A and said initiator number-only-once Ni, and furthermore of one or more of:
- a time period identifier T representing a time period;
- a zone identifier Z representing a zone, i.e. a group of networks, a network or a part of a network; and
- a node type identifier G representing a group of nodes,
and wherein said initiator (1) stores said generator value g, said prime value p, said first secret value a, said initiator number-only-once Ni and respectively said time period identifier T and/or said zone identifier Z and/or said node type identifier G to jointly form a restricted unique persistent node identity which is only significant within said time period and/or within said zone, and/or within said group of nodes.

5. The method according to claim 2, wherein said responder (3) generates said second secret value b through a second pseudo-random function of an additional variable v with value such that said second Diffie-Hellman value B, said shared secret key value K or derived keying material of the security association satisfies a second difficulty condition (111, 112).

6. The method according to claim 5, further comprising:
- said initiator (1) assessing whether said second Diffie-Hellman value B satisfies said second difficulty condition (111, 112) in order to decide whether to communicate with said responder (3) or which information to send to said responder (3), and/or
- said initiator (1) assessing whether said shared secret key value K satisfies said second difficulty condition (111, 112) in order to decide whether to communicate with said responder (3) or which information to send to said responder (3), and/or
- said initiator (1) assessing whether further keying material of the security association satisfies said second difficulty condition (111; 112) in order to decide whether to communicate with said responder (3) or which information to send to said responder (3).

7. The method according to claim 5, further comprising:
- said responder (3) storing said generator value g, said prime value p, said additional variable value v and at least one of said first Diffie-Hellman value A and said initiator number-only-once Ni.

8. The method according to claims 2, further comprising:
- said initiator (1) retrieving said unique persistent node identity or said restricted unique persistent node identity from storage;
- said initiator generating said initiator number-only-once Ni or retrieving it from said storage;
- said initiator (1) calculating said first Diffie-Hellman value A;
- said initiator (1) transferring (201) said generator value g, said prime value p, said first Diffie-Hellman value A and said initiator number-only-once Ni to a subsequent responder (5);
- said subsequent responder (5) verifying whether said first Diffie-Hellman value A satisfies said first difficulty condition (211, 212) and if it does:
- said subsequent responder (5) generating said responder number-only-once Nr through said pseudo-random function of at least one of said first Diffie-Hellman value A and said initiator number-only-once Ni;
- said subsequent responder (5) generating a second secret value b;
- said subsequent responder (5) calculating a second Diffie-Hellman value B for said generator value g, said second secret value b and said prime value p;
- said subsequent responder (5) transferring (202) said second Diffie-Hellman value B and said responder number-only-once Nr to said initiator (1);
- said subsequent responder (5) calculating a subsequent shared secret key value K' from said first Diffie-Hellman value A, said second secret value b and said prime value p; and
- said initiator (1) calculating said subsequent shared secret key value K' from said second Diffie-Hellman value B, said first secret value a and said prime value p.

9. The method according to claim 2, further comprising:
- said initiator (1) transferring to said responder (3) or said subsequent responder (5), further denoted responder (3,5), Encapsulating Security Payload packets (407) each comprising a security parameter index, a sequence number, a payload and an integrity check vector; and
- said responder (3, 5) verifying for each one of said Encapsulating Security Payload packets (407) if said integrity check vector satisfies said first difficulty condition or a third difficulty condition, jointly referred to as a user plane difficulty condition, and in case said integrity check vector satisfies said user plane difficulty condition:
- said responder (3, 5) enabling prolonged or extended services for said initiator (1);
- said initiator (1) storing in relation to said generator value g, said prime value p, said first secret value a also said initiator number-only-once Ni, said security parameter index, said sequence number and said payload of an Encapsulating Security Payload packet (407) whose integrity check vector satisfies said user plane difficulty condition to jointly form an extended unique persistent node identity.

10. The method according to claim 9, further comprising:
- said initiator (1) storing said security parameter index, said sequence number, and said payload each time an Encapsulating Security Payload packet is transferred whose integrity check vector satisfies said user plane difficulty condition to herewith renew said extended unique persistent node identity.

11. The method according to claim 9 or claim 10, further comprising:
- said initiator (1) transferring to said responder (3, 5) Encapsulating Security Payload packets (507, 508) each comprising a security parameter index, a sequence number, a payload and integrity check vector; and
- said responder (3, 5) verifying for each one of said Encapsulating Security Payload packets (507, 508) if said integrity check vector satisfies said user plane difficulty condition,
and in case said integrity check vector satisfies said user plane difficulty condition:
- said responder (3, 5) discarding said Encapsulating Security Payload packet (508) whose integrity check vector satisfies said user plane difficulty condition, without delivering or transmitting said Encapsulating Security Payload packet (508) onwards; and
- said responder (3, 5) enabling prolonged or extended services for said initiator (1).

12. The method according to claims 9, 10 or 11, further comprising:
- said initiator (1) randomly generating a new first secret value a';
- said initiator (1) transferring to said responder (3, 5) an Encapsulating Security Payload packet (601) comprising a security parameter index, a sequence number, an encrypted payload comprising a new first Diffie-Hellman value A' for said new first secret value a', and an integrity check vector;
- said initiator (1) noticing when said new first Diffie-Hellman value A' satisfies said first difficulty condition;
- said initiator (1) noticing when said integrity check vector satisfies said user plane difficulty condition;
- said responder (3, 5) verifying for said Encapsulating Security Payload packet (601) if said new first Diffie-Hellman value A' satisfies said first difficulty condition;
- said responder (3, 5) verifying for said Encapsulating Security Payload packet (601) if said integrity check vector satisfies said user plane difficulty condition;
and in case said new first Diffie-Hellman value A' satisfies said first difficulty condition and/or said integrity check vector satisfies said user plane difficulty condition:
- said responder (3, 5) optionally generating a new responder number-only-once Nr' through a pseudo-random function of at least one of said new first Diffie-Hellman value A' and said initiator number-only-once Ni;
- said responder (3, 5) generating a new second secret value b' either randomly or through a pseudo-random function of at least one of said new first Diffie-Hellman value A' and said initiator number-only-once Ni;
- said responder (3, 5) calculating a renewed shared secret key value K" from said new first Diffie-Hellman value A', said new second secret value b' and said prime value p;
- said responder (3, 5) calculating a new second Diffie-Hellman value B' for said new second secret value b';
- said responder (3, 5) transferring (602) said new second Diffie-Hellman value B' for said new second secret value b' to said initiator (1);
- said responder (3, 5) transferring (602) said new responder number-only-once Nr' to said initiator (1) if said new responder number-only-once Nr' was generated by said responder (3, 5);
- said initiator (1) calculating a renewed shared secret key value K" from said new second Diffie-Hellman value B', said new first secret value a' and said prime value p; and
- if said new first Diffie-Hellman value A' satisfies said first difficulty condition, said initiator (1) storing said generator value g, said prime value p and said new first secret value a' to jointly form a renewed unique persistent node identity.

13. The method according to claim 12, further comprising:
- said initiator (1) assessing whether said new responder number-only-once value Nr' is resulting from applying said pseudo-random function to at least one of said new first Diffie-Hellman value A' and said initiator number-only-once Ni in order to decide whether to continue to communicate with said responder (3, 5) or which information to send to said responder (3, 5), and/or - said initiator (1) assessing whether said new second Diffie-Hellman value B' is resulting from applying said pseudo-random function to at least one of said new first Diffie-Hellman value A' and said initiator number-only-once Ni in order to decide whether to continue to communicate with said responder (3, 5) or which information to send to said responder (3, 5), and/or
- said initiator (1) assessing whether said new second Diffie-Hellman value B' satisfies said second difficulty condition in order to decide whether to continue to communicate with said responder (3, 5) or which information to send to said responder (3, 5), and/or
- said initiator (1) assessing whether said renewed shared secret key value K" satisfies said second difficulty condition in order to decide whether to continue to communicate with said responder (3, 5) or which information to send to said responder (3, 5).

14. The method according to claim 12 or claim 13, wherein said responder (3, 5) generates at least one of said new responder number-only-once Nr' and said new second secret value b' through a pseudo-random function of at least one of said new first Diffie-Hellman value A' and said initiator number-only-once Ni, and furthermore of one or more of:
- a time period identifier T representing a time period; and
- a zone identifier Z representing a zone, i.e. a group of networks, a network or a part of a network; and
- a node type identifier G representing a group of nodes,
and wherein said initiator (1) stores said generator value g, said prime value p, said new first secret value a', said initiator number-only-once Ni and respectively said time period identifier T, said zone identifier Z and/or said node type identifier G to jointly form a renewed restricted unique persistent node identity which is only significant within said time period, said zone and/or said node group.

15. An initiator node (1) configured to perform the method of one of claims 1-14.

16. A responder node (3, 5) configured to perform the method of one of claims 1-14.
